# FASCICULE DE BREVET EUROPEEN

(11) **EP 2 985 561 B1**
(45) Date de publication et mention de la délivrance du brevet: **19.09.2018**
(21) Numéro de dépôt: 15178155.6
(22) Date de dépôt: 23.07.2015
(51) Int. Cl.: F28F 9/02, F28F 1/02

(54) **ECHANGEUR THERMIQUE ET DISPOSITIF DE GESTION THERMIQUE CORRESPONDANT**
WÄRMETAUSCHER UND ENTSPRECHENDE VORRICHTUNG ZUR WÄRMESTEUERUNG
HEAT EXCHANGER AND CORRESPONDING THERMAL MANAGEMENT DEVICE

(30) Priorité: 04.08.2014 FR 1457587
(43) Date de publication de la demande: 17.02.2016
(73) Titulaire: VALEO SYSTEMES THERMIQUES, 78320 Le Mesnil Saint-Denis (FR)
(72) Inventeur: POURMARIN, Alain, 72210 LA SUZE-SUR-SARTHE (FR); PREVOST, Jean Christophe, 72270 LIGRON (FR); TRINDADE, José, 78125 GAZERAN (FR); BIREAUD, Fabien, 78320 LE MESNIL SAINT-DENIS (FR); CHEVALLIER, Christophe, 72650 LA CHAPELLE-SAINT-AUBIN (FR)
(74) Mandataire: Metz, Gaëlle

(56) Documents cités:
- EP-A2- 1 371 927
- JP-A- H11 325 755
- US-A- 5 477 919

## Description

La présente invention concerne la régulation thermique au sein d'un véhicule et plus précisément un échangeur thermique ainsi que le dispositif de gestion thermique correspondant. Un échangeur thermique selon le préambule de la revendication 1 est connu du document JPH 11 325755.

Afin de réguler la température d'éléments, par exemple les batteries au sein d'un véhicule automobile électrique ou hybride, il est connu de leur accoler un échangeur thermique relié à un circuit de gestion thermique et ce aussi bien pour refroidir ces éléments que le réchauffer si besoin.

La régulation thermique des batteries dans le domaine automobile et encore plus particulièrement des véhicules électriques et hybrides, est un point important car si les batteries sont soumises à des températures trop froides, leur autonomie peut décroitre fortement et si elles sont soumises à des températures trop importantes, il y a un risque d'emballement thermique pouvant aller jusqu'à la destruction de la batterie.

Afin de réguler la température des batteries, il est connu d'ajouter un dispositif de gestion thermique du module batterie. Ces dispositifs utilisent généralement des fluides caloporteurs circulant, par exemple au moyen d'une pompe, dans un circuit de conduit, ledit circuit de conduit passant notamment sous ou à l'intérieur d'un échangeur thermique en contact direct avec les batteries.

Les fluides caloporteurs peuvent ainsi absorber de la chaleur émise par la ou les batteries afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites batteries, par exemple s'ils sont reliés à une résistance électrique ou à un chauffage par Coefficient Positif de Température (CTP).

Les fluides caloporteurs généralement utilisés sont l'air ambiant ou des liquides comme par exemple l'eau. Les liquides étant meilleurs conducteurs de chaleur que les gaz, c'est une solution qui est privilégiée car plus efficace.

Néanmoins il peut être difficile de fixer et connecter ces différents éléments et notamment un échangeur thermique, au circuit de gestion thermique ce qui peut impacter sur les temps de montage et de fabrication.

Ainsi, un des buts de la présente invention est de proposer un échangeur thermique ainsi que le dispositif de gestion thermique associé avec des connexions et branchements améliorés.

La présente invention concerne donc un échangeur thermique comportant les caractéristiques de la revendication 1.

La présence de ce système de connexion, regroupant à la fois l'arrivée et l'évacuation de fluide caloporteur, permet de faciliter le branchement et le montage de l'échangeur thermique au sein d'un dispositif de gestion thermique.

Selon un aspect de l'invention, le système de connexion est fixé sur une extrémité de la partie proximale du premier collecteur, le connecteur d'alimentation débouchant dans la partie proximale du premier collecteur et le connecteur d'évacuation étant relié à l'évacuation de fluide caloporteur de la partie distale dudit premier collecteur au moyen d'un raccord.

Selon un autre aspect de l'invention, le premier collecteur et le système de connexion sont réalisés en un matériau métallique et que leur fixation est réalisée par brasage.

Selon l'invention, le système de connexion comporte une fente de prépositionnement à l'intérieur de laquelle le tube périphérique proximal est inséré au moins partiellement.

Selon un autre aspect de l'invention, le système de connexion comporte au moins un doigt de retenue.

Le doigt de retenue permet notamment un maintien dudit système de connexion lors des branchements.

Selon un autre aspect de l'invention, les tubes plats ont leurs surfaces planes parallèles à l'axe des premier et second collecteurs.

Selon un autre aspect de l'invention, le connecteur d'alimentation et le connecteur d'évacuation ont une conformation de branchement différente l'une de l'autre.

Cette conformation différentes joue un rôle de détrompeur pour éviter des inversions de branchement.

La présente invention concerne également un dispositif de gestion thermique comportant un circuit de gestion thermique dans lequel circule le fluide caloporteur et comportant un échangeur thermique comme décrit précédemment.

Selon un aspect du dispositif selon l'invention, ce dernier comporte en outre un système de branchement à l'échangeur thermique, complémentaire du système de connexion et comprenant :
- un premier connecteur relié au circuit de gestion thermique par un canal d'alimentation, ledit premier connecteur se branchant avec le connecteur d'alimentation de façon étanche de sorte à alimenter l'échangeur thermique en fluide caloporteur,
- un second connecteur relié au circuit de gestion thermique par un canal d'évacuation, ledit second connecteur se branchant avec le connecteur d'évacuation de façon étanche de sorte à évacuer le fluide caloporteur ayant traversé l'échangeur thermique.

Selon un autre aspect du dispositif selon l'invention, les connecteurs d'alimentation et d'évacuation sont des orifices et que les premier et second connecteurs sont des embouts s'incérant dans lesdits orifices.

Selon un autre aspect du dispositif selon l'invention, la fixation entre le système de connexion et le système de branchement est réalisée au moyen d'au moins une vis.

Selon un autre aspect du dispositif selon l'invention, ledit dispositif comporte des joints placés autour des embouts des premier et second connecteurs.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'une portion d'un échangeur thermique selon l'invention,
- la figure 2 montre une représentation schématique en perspective éclatée d'une connexion entre un échangeur thermique et un circuit de gestion thermique,
- la figure 3 montre une représentation schématique en perspective en coupe d'un échangeur thermique selon l'invention au niveau d'un collecteur,
- la figure 4 montre une représentation schématique en perspective et en coupe d'une connexion entre un échangeur thermique et un circuit de gestion thermique,
- la figure 5 montre une représentation schématique en perspective d'un échangeur thermique selon l'invention au niveau d'un collecteur selon un angle de vue différent,
- la figure 6 montre une représentation schématique en vue de dessus d'un échangeur thermique selon l'invention installé entre deux batteries, et
- les figures 7a et 7b montrent des représentations schématiques en vue de coupe d'échangeurs thermiques selon deux modes de réalisations.

Les éléments identiques sur les différentes figures, portent les mêmes références.

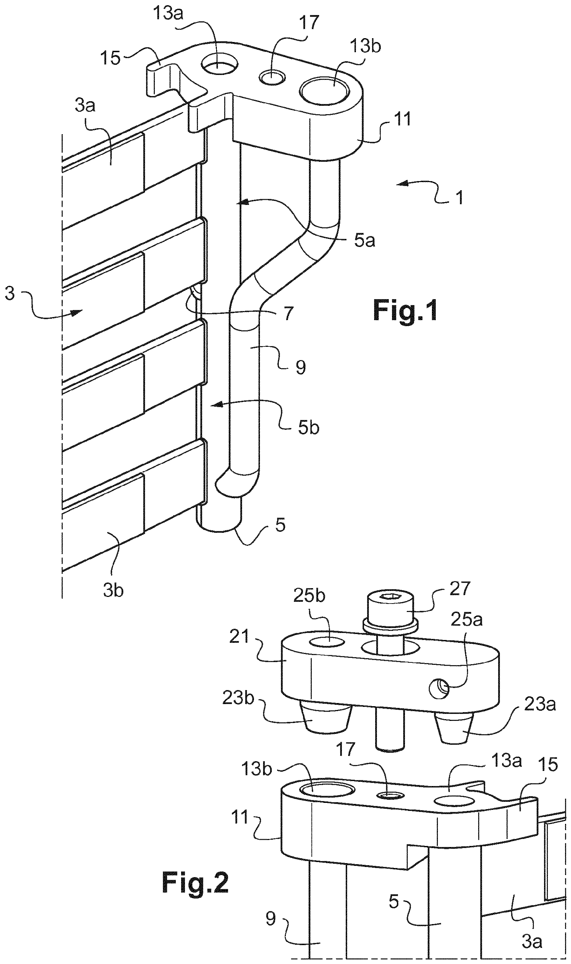

Comme le montre la figure 1 montrant une représentation schématique en perspective d'une portion d'un échangeur thermique 1 selon l'invention, ce dernier comprend :
- des tubes plats 3 placés parallèlement les un aux autres,
- un premier et un second collecteurs 5 (seul le premier collecteur est visible ici) de fluide caloporteur placés respectivement chacun à une extrémité 31 des tubes plats 3.

Le premier collecteur 5 comporte au moins une partie proximale 5a, comprenant au moins un premier tube périphérique 3a, à laquelle est connectée une arrivée de fluide caloporteur. Par tube périphérique, on entend un tube plat 3 qui est situé en haut ou en bas à une extrémité de l'agencement de tubes plats 3. Le premier collecteur comporte également une partie distale 5b à laquelle est connectée une évacuation de fluide caloporteur et comprenant au moins un second tube périphérique 3b distinct de celui de la partie proximale 5b.

Les parties 5a, 5b sont séparées par au moins un écran 7 placé au sein dudit premier collecteur 5 entre deux extrémités de 31 tubes plats 3. Cette écran 7 bloque la circulation de fluide caloporteur entre lesdits deux tubes plats 3 au sein dudit premier collecteur 5.

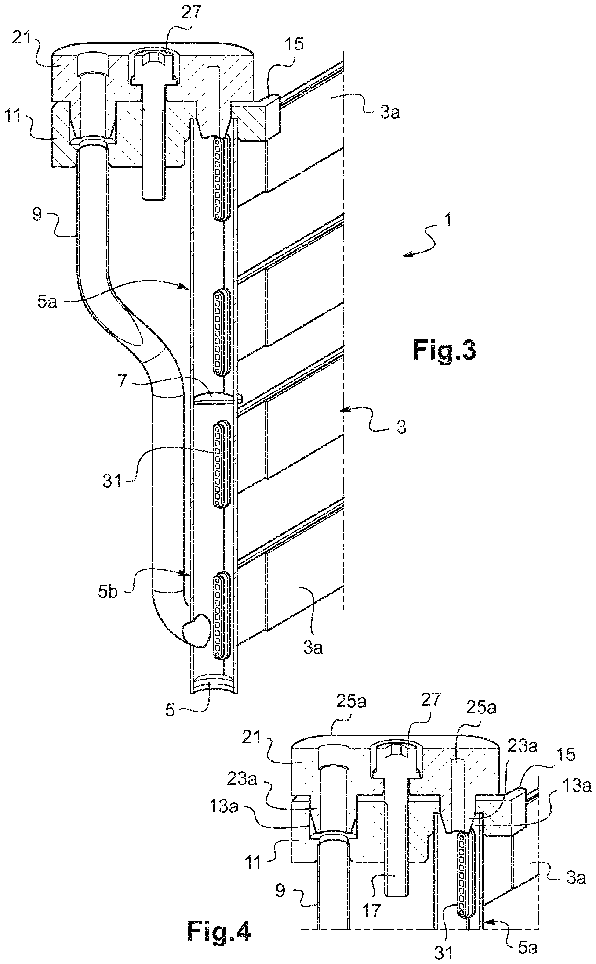

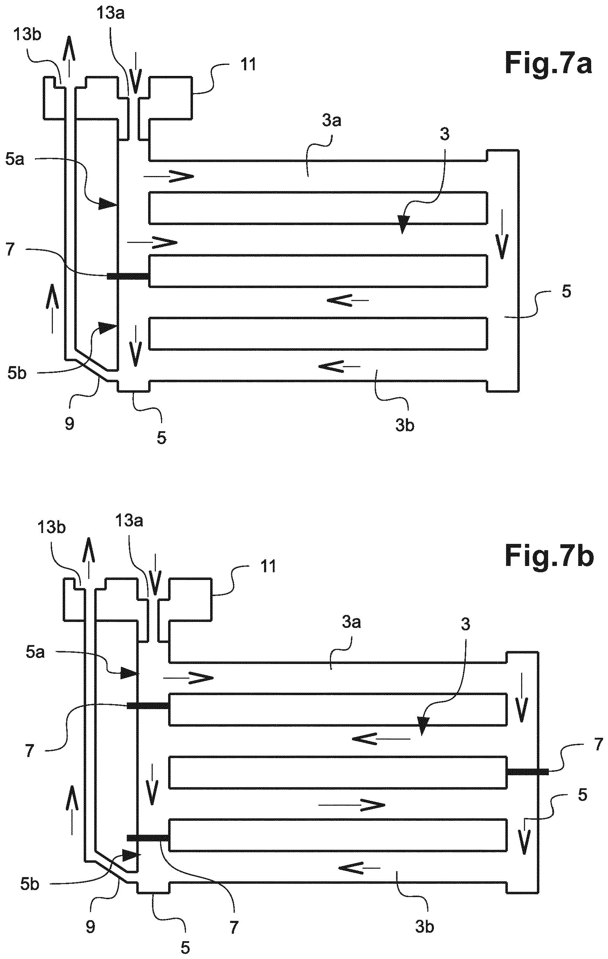

Dans l'exemple montré aux figures 1 et 3 et plus particulièrement sur la figure 7a, le premier collecteur 5 comporte un seul écran 7. Le fluide caloporteur arrive ainsi dans la partie proximale 5a et traverse les tubes plats 3, dont le premier tube périphérique 3a, qui sont en amont de l'écran 7. Le fluide passe ensuite dans le second collecteur (qui ici ne comporte pas d'écran) et passe dans les tubes plats 3, dont le second tube périphérique 3b, situés en aval de l'écran 7.

Il est cependant tout à fait possible d'imaginer un mode de réalisation où le premier collecteur 5 comporte plusieurs écrans 7 définissant plusieurs autres parties et où le second collecteur en comporte également afin d'augmenter le nombre de passe du fluide caloporteur entre la partie proximale 5A et la partie distale 5b. ce mode de réalisation est par exemple illustré à la figure 7b.

Que ce soit dans un cas ou d'en l'autre, l'arrivée de fluide caloporteur et son évacuation se fait au niveau d'un même collecteur 5.

L'échangeur thermique 1 comporte en outre un système de connexion 11 fixé au premier collecteur 5. Ce système de connexion 11 comporte notamment un connecteur d'alimentation 13a relié à l'arrivée de fluide caloporteur de la partie proximale 5a du premier collecteur 5 et un connecteur d'évacuation 13b relié à l'évacuation de fluide caloporteur de la partie distale 5b du premier collecteur 5.

La présence de ce système de connexion 11, regroupant à la fois l'arrivée et l'évacuation de fluide caloporteur, permet de faciliter le branchement et le montage de l'échangeur thermique au sein d'un dispositif de gestion thermique.

Le connecteur d'alimentation 13a et le connecteur d'évacuation 13b peuvent avoir une conformation de branchement différente l'une de l'autre. Cette conformation de branchement différente joue un rôle de détrompeur afin de facilité la connexion de l'échangeur thermique 1 avec le dispositif de gestion thermique. Par exemple les connecteurs d'alimentation 13a et d'évacuation 13b peuvent être circulaire tout deux avec des diamètres différents comme représenté sur les différentes figures.

Le système de connexion 11 peut être fixé sur une extrémité de la partie proximale 5a du premier collecteur 5, le connecteur d'alimentation 13a débouchant alors dans la partie proximale 5a du premier collecteur 5 et le connecteur d'évacuation 13b étant relié à l'évacuation de fluide caloporteur de la partie distale 2b dudit premier collecteur 5 au moyen d'un raccord 9.

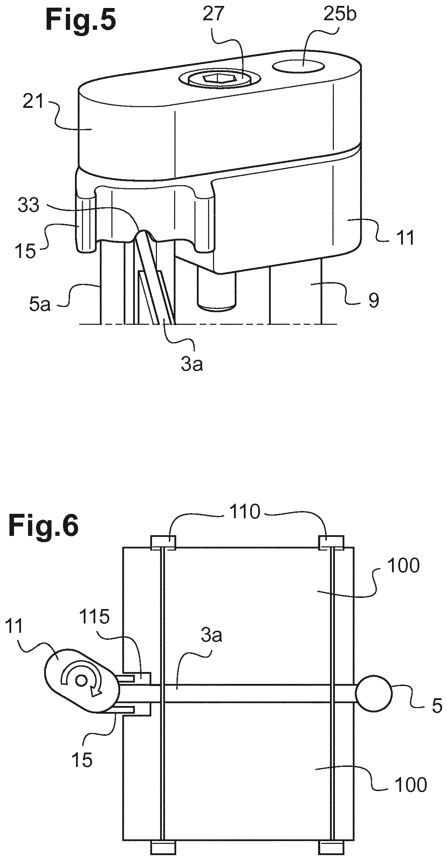

Dans les exemples présentés sur les différentes figures, l'échangeur thermique 1 est un échangeur thermique destiné à venir au contact d'au moins une batterie 100 afin de la réchauffer ou de la refroidir selon les conditions et les besoins (voir figure 6). Ainsi, afin de faciliter le contact avec la ou les batteries 100, les tubes plats 3 ont leurs surfaces planes parallèles à l'axe des premier et second collecteurs 5. Dans ce genre de dispositif de gestion thermique de batterie, le fluide caloporteur utilisé peut notamment être du 1,1,1,2-tétrafluoroéthane (R134a), du 2,3,3,3-tétrafluoropropène (R1234yf) ou encore du dioxyde de carbone (R744).

Le premier collecteur 5 et le système de connexion 11 peuvent être réalisés en un matériau métallique et de ce fait, leur fixation peut être réalisée par brasage. Le système de connexion 11 peut également comporter une fente de prépositionnement 33, comme illustré sur la figure 5, à l'intérieur de laquelle le tube périphérique proximal 3a est inséré au moins partiellement. Cette fente de prépositionnement 33 permet notamment un positionnement optimal du système de connexion 11 par rapport au premier collecteur 5 et des tubes plats et également un certain maintien lors de la fixation dudit système de connexion 11.

L'échangeur thermique 1 est destiné à venir se connecter avec un dispositif de gestion thermique comportant un circuit de gestion thermique dans lequel circule le fluide caloporteur.

Comme illustré sur les figures 2 à 5, ledit dispositif de gestion thermique peut comporter en outre un système de branchement 21 à l'échangeur thermique 1, complémentaire du système de connexion 11 et comprenant :
- un premier connecteur 23a relié au circuit de gestion thermique par un canal d'alimentation 25a, ledit premier connecteur 23a se branchant avec le connecteur d'alimentation 13a de façon étanche de sorte à alimenter l'échangeur thermique 1 en fluide caloporteur,
- un second connecteur 23b relié au circuit de gestion thermique par un canal d'évacuation 25b, ledit second connecteur 23b se branchant avec le connecteur d'évacuation 13b de façon étanche de sorte à évacuer le fluide caloporteur ayant traversé l'échangeur thermique 1.

Selon un mode de réalisation privilégier et illustré sur les figures 1 à 4 les connecteurs d'alimentation 13a et d'évacuation 13b sont des orifices et les premier 23a et second 23b connecteurs sont des embouts s'incérant dans lesdits orifices. Afin d'assurer l'étanchéité de la connexion, le dispositif peut comporter des joints placés autour des embouts des premier 23a et second 23b connecteurs.

Le système de connexion 11 et le système de branchement 21 sont fixés l'un à l'autre afin d'assurer une bonne connexion et une solidité à l'ensemble. Cette fixation peut être réalisée au moyen d'au moins une vis 27 traversant le système de branchement 21 et venant se viser dans un orifice tarauder 17 placé sur le système de connexion 11.

Le système de connexion 11 peut également comporter au moins un doigt 15 de retenue comme cela est montré sur les différentes figures. Ce doigt de retenue 15 est placé de sorte à venir en buté contre un élément, plus particulièrement contre une ou deux batteries 100, comme illustré sur la figure 6, afin d'éviter les mouvements de rotation lors de la fixation du système de branchement 21 sur le système de connexion.

Ainsi, on voit bien que du fait que l'alimentation et l'évacuation du fluide caloporteur se fasse au niveau d'un même collecteur et également du fait de la présence d'un système de connexion, le branchement de l'échangeur thermique est facilité, et ce d'autant plus si le dispositif de gestion thermique comporte un système de branchement complémentaire.

## Revendications

1. Echangeur thermique (1) comportant :
- des tubes plats (3) placés parallèlement les un aux autres,
- un premier et un second collecteurs (5) de fluide caloporteur placés respectivement chacun à une extrémité (31) des tubes plats (3),
**caractérisé en ce que** le premier collecteur (5) est divisé en au moins une partie proximale (5a), comprenant au moins un premier tube périphérique (3a), et à laquelle est connectée une arrivée de fluide caloporteur et une partie distale (5b) à laquelle est connectée une évacuation de fluide caloporteur et comprenant au moins un second tube périphérique (3b) distinct de celui de la partie proximale (5a), lesdites parties (5a, 5b) étant séparées par au moins un écran (7) placé au sein dudit premier collecteur (5) entre deux extrémités (31) de tubes plats (3), bloquant la circulation de fluide caloporteur entre lesdits deux tubes plats (3) au sein dudit premier collecteur (5),
l'échangeur thermique (1) comportant en outre un système de connexion (11) fixé au premier collecteur (5) et comportant un connecteur d'alimentation (13a) relié à l'arrivée de fluide caloporteur de la partie proximale (5a) du premier collecteur (5) et un connecteur d'évacuation (13b) relié à l'évacuation de fluide caloporteur de la partie distale (5b) du premier collecteur (5),
**caractérisé par** le système de connexion (11) comportant une fente de prépositionnement (33) à l'intérieur de laquelle le tube périphérique proximal (3a) est inséré au moins partiellement.

2. Echangeur thermique (1) selon la revendication précédente, **caractérisé en ce que** le système de connexion (11) est fixé sur une extrémité de la partie proximale (5a) du premier collecteur (5), le connecteur d'alimentation (13a) débouchant dans la partie proximale (5a) du premier collecteur (5) et le connecteur d'évacuation (13b) étant relié à l'évacuation de fluide caloporteur de la partie distale (2b) dudit premier collecteur (5) au moyen d'un raccord (9).

3. Echangeur thermique (1) selon l'une des revendications précédentes, **caractérisé en ce que** le premier collecteur (5) et le système de connexion (11) sont réalisés en un matériau métallique et que leur fixation est réalisée par brasage.

4. Echangeur thermique (1) selon l'une des revendications précédentes, **caractérisé en ce que** ledit système de connexion (11) comporte au moins un doigt (15) de retenue.

5. Echangeur thermique (1) selon l'une des revendications précédentes, **caractérisé en ce que** les tubes plats (3) ont leurs surfaces planes parallèles à l'axe des premier et second collecteurs (5).

6. Echangeur thermique (1) selon l'une des revendications précédentes, **caractérisé en ce que** le connecteur d'alimentation (13a) et le connecteur d'évacuation (13b) ont une conformation de branchement différente l'une de l'autre.

7. Dispositif de gestion thermique comportant un circuit de gestion thermique dans lequel circule le fluide caloporteur et comportant un échangeur thermique (1) selon l'une des revendications 1 à 6.

8. Dispositif de gestion thermique selon la revendication précédente, **caractérisé en ce qu'**il comporte en outre un système de branchement (21) à l'échangeur thermique (1), complémentaire du système de connexion (11) et comprenant :
- un premier connecteur (23a) relié au circuit de gestion thermique par un canal d'alimentation (25a), ledit premier connecteur (23a) se branchant avec le connecteur d'alimentation (13a) de façon étanche de sorte à alimenter l'échangeur thermique (1) en fluide caloporteur,
- un second connecteur (23b) relié au circuit de gestion thermique par un canal d'évacuation (25b), ledit second connecteur (23b) se branchant avec le connecteur d'évacuation (13b) de façon étanche de sorte à évacuer le fluide caloporteur ayant traversé l'échangeur thermique (1).

9. Dispositif de gestion thermique selon la revendication précédente, **caractérisé en ce que** les connecteurs d'alimentation (13a) et d'évacuation (13b) sont des orifices et que les premier (23a) et second (23b) connecteurs sont des embouts s'incérant dans lesdits orifices.

10. Dispositif de gestion thermique selon l'une des revendications 8 ou 9, **caractérisé en ce que** la fixation entre le système de connexion (11) et le système de branchement (21) est réalisée au moyen d'au moins une vis (27).

11. Dispositif de gestion thermique selon l'une des revendications 9 ou 10, **caractérisé en ce que** ledit dispositif comporte des joints placés autour des embouts des premier (23a) et second (23b) connecteurs.

## Patentansprüche

1. Wärmetauscher (1), welcher aufweist:
- Flachrohre (3), die parallel zueinander angeordnet sind,
- einen ersten und einen zweiten Sammler (5) für Wärmeträgerfluid, die jeweils an einem Ende (31) der Flachrohre (3) angeordnet sind,
**dadurch gekennzeichnet, dass** der erste Sammler (5) aufgeteilt ist in wenigstens einen proximalen Teil (5a), der wenigstens ein erstes Umfangsrohr (3a) umfasst und an den ein Wärmeträgerfluidzulauf angeschlossen ist, und einen distalen Teil (5b), an den ein Wärmeträgerfluidablauf angeschlossen ist und der wenigstens ein zweites Umfangsrohr (3b) umfasst, das von demjenigen des proximalen Teils (5a) verschieden ist, wobei die Teile (5a, 5b) durch wenigstens einen Schirm (7) getrennt sind, der innerhalb des ersten Sammlers (5) zwischen zwei Enden (31) von Flachrohren (3) angeordnet ist, wobei er die Zirkulation von Wärmeträgerfluid zwischen den zwei Flachrohren (3) innerhalb des ersten Sammlers (5) blockiert,
wobei der Wärmetauscher (1) außerdem ein Verbindungssystem (11) aufweist, das an dem ersten Sammler (5) befestigt ist und einen Versorgungsanschluss (13a), der mit dem Wärmeträgerfluidzulauf des proximalen Teils (5a) des ersten Sammlers (5) verbunden ist, und einen Ablaufanschluss (13b), der mit dem Wärmeträgerfluidablauf des distalen Teils (5b) des ersten Sammlers (5) verbunden ist, aufweist, **dadurch gekennzeichnet, dass**
das Verbindungssystem (11) einen Vorpositionierungsschlitz (33) aufweist, in dessen Inneres das proximale Umfangsrohr (3a) wenigstens teilweise eingesetzt ist.

2. Wärmetauscher (1) nach dem vorhergehenden Anspruch, **dadurch gekennzeichnet, dass** das Verbindungssystem (11) an einem Ende des proximalen Teils (5a) des ersten Sammlers (5) befestigt ist, wobei der Versorgungsanschluss (13a) in den proximalen Teil (5a) des ersten Sammlers (5) mündet und der Ablaufanschluss (13b) mit dem Wärmeträgerfluidablauf des distalen Teils (2b) des ersten Sammlers (5) mittels eines Anschlussstücks (9) verbunden ist.

3. Wärmetauscher (1) nach einem der vorhergehenden Ansprüche, **dadurch gekennzeichnet, dass** der erste Sammler (5) und das Verbindungssystem (11) aus einem metallischen Material hergestellt sind und dass ihre Befestigung durch Löten ausgeführt ist.

4. Wärmetauscher (1) nach einem der vorhergehenden Ansprüche, **dadurch gekennzeichnet, dass** das Verbindungssystem (11) wenigstens einen Haltefinger (15) aufweist.

5. Wärmetauscher (1) nach einem der vorhergehenden Ansprüche, **dadurch gekennzeichnet, dass** die ebenen Flächen der Flachrohre (3) parallel zur Achse des ersten und zweiten Sammlers (5) sind.

6. Wärmetauscher (1) nach einem der vorhergehenden Ansprüche, **dadurch gekennzeichnet, dass** der Versorgungsanschluss (13a) und der Ablaufanschluss (13b) eine unterschiedliche Anschlussgestaltung aufweisen.

7. Vorrichtung zum Wärmemanagement, die einen Wärmemanagementkreis aufweist, in welchem das Wärmeträgerfluid zirkuliert, und die einen Wärmetauscher (1) nach einem der Ansprüche 1 bis 6 aufweist.

8. Vorrichtung zum Wärmemanagement nach dem vorhergehenden Anspruch, **dadurch gekennzeichnet, dass** sie außerdem ein System zum Anschluss (21) an den Wärmetauscher (1) aufweist, das zu dem Verbindungssystem (11) komplementär ist und umfasst:
- einen ersten Anschluss (23a), der mit dem Wärmemanagementkreis über einen Versorgungskanal (25a) verbunden ist, wobei der erste Anschluss (23a) an den Versorgungsanschluss (13a) dicht angeschlossen wird, um den Wärmetauscher (1) mit Wärmeträgerfluid zu versorgen,
- einen zweiten Anschluss (23b), der mit dem Wärmemanagementkreis über einen Ablaufkanal (25b) verbunden ist, wobei der zweite Anschluss (23b) an den Ablaufanschluss (13b) dicht angeschlossen wird, um das Wärmeträgerfluid, das den Wärmetauscher (1) durchströmt hat, abzuführen.

9. Vorrichtung zum Wärmemanagement nach dem vorhergehenden Anspruch, **dadurch gekennzeichnet, dass** der Versorgungsanschluss (13a) und der Ablaufanschluss (13b) Öffnungen sind und dass der erste (23a) und der zweite (23b) Anschluss Ansatzstücke sind, die in diese Öffnungen eingeschoben werden.

10. Vorrichtung zum Wärmemanagement nach einem der Ansprüche 8 oder 9, **dadurch gekennzeichnet, dass** die Befestigung zwischen dem Verbindungssystem (11) und dem Anschlusssystem (21) mittels wenigstens einer Schraube (27) durchgeführt wird.

11. Vorrichtung zum Wärmemanagement nach einem der Ansprüche 9 oder 10, **dadurch gekennzeichnet, dass** die Vorrichtung Dichtungen aufweist, die um Ansatzstücke des ersten (23a) und zweiten (23b) Anschlusses herum angeordnet sind.

## Claims

1. Heat exchanger (1) comprising:
- flat tubes (3) placed parallel to one another,
- a first and a second heat-transfer fluid manifold (5), each placed respectively at an end (31) of the flat tubes (3),
**characterized in that** the first manifold (5) is divided into at least one proximal part (5a), comprising at least one first peripheral tube (3a), and to which is connected a heat-transfer fluid intake and one distal part (5b) to which is connected a heat-transfer fluid discharge and comprising at least one second peripheral tube (3b) distinct from that of the proximal part (5a), said parts (5a, 5b) being separated by at least one screen (7) placed in said first manifold (5) between two ends (31) of flat tubes (3), blocking the circulation of heat-transfer fluid between said two flat tubes (3) in said first manifold (5),
the heat exchanger (1) further comprising a connection system (11) fixed to the first manifold (5) and comprising a supply connector (13a) linked to the heat-transfer fluid intake of the proximal part (5a) of the first manifold (5) and a discharge connector (13b) linked to the heat-transfer fluid discharge of the distal part (5b) of the first manifold (5), **characterized by**
the connection system (11) comprising a prepositioning slot (33) into which the proximal peripheral tube (3a) is at least partially inserted.

2. Heat exchanger (1) according to the preceding claim, **characterized in that** the connection system (11) is fixed onto an end of the proximal part (5a) of the first manifold (5), the supply connector (13a) emerging in the proximal part (5a) of the first manifold (5) and the discharge connector (13b) being linked to the heat-transfer fluid discharge of the distal part (2b) of said first manifold (5) by means of a coupling (9).

3. Heat exchanger (1) according to one of the preceding claims, **characterized in that** the first manifold (5) and the connection system (11) are made of a metal material and their fixing is produced by brazing.

4. Heat exchanger (1) according to one of the preceding claims, **characterized in that** said connection system (11) comprises at least one retaining pawl (15).

5. Heat exchanger (1) according to one of the preceding claims, **characterized in that** the flat tubes (3) have their planar surfaces parallel to the axis of the first and second manifolds (5).

6. Heat exchanger (1) according to one of the preceding claims, **characterized in that** the supply connector (13a) and the discharge connector (13b) have mutually different branching configurations.

7. Thermal management device comprising a thermal management circuit in which the heat-transfer fluid circulates and comprising a heat exchanger (1) according to one of Claims 1 to 6.

8. Thermal management device according to the preceding claim, **characterized in that** it further comprises a branching system (21) for connecting to the heat exchanger (1), complementing the connection system (11) and comprising:
a first connector (23a) linked to the thermal management circuit by a supply channel (25a), said first connector (23a) connecting with the supply connector (13a) in a seal-tight manner so as to supply the heat exchanger (1) with heat-transfer fluid,
a second connector (23b) linked to the thermal management circuit by a discharge channel (25b), said second connector (23b) connecting with the discharge connector (13b) in a seal-tight manner so as to discharge the heat-transfer fluid having passed through the heat exchanger (1).

9. Thermal management device according to the preceding claim, **characterized in that** the supply (13a) and discharge (13b) connectors are orifices and that the first (23a) and second (23b) connectors are end-fittings that are inserted into said orifices.

10. Thermal management device according to Claim 8 or 9, **characterized in that** the fixing between the connection system (11) and the branching system (21) is produced by means of at least one screw (27).

11. Thermal management device according to Claim 9 or 10, **characterized in that** said device comprises seals placed around the end-fittings of the first (23a) and second (23b) connectors.
